# EUROPÄISCHE PATENTSCHRIFT

(11) **EP 0 736 571 B1**
(45) Veröffentlichungstag und Bekanntmachung des Hinweises auf die Patenterteilung: **30.09.1998**
(21) Anmeldenummer: 96104698.4
(22) Anmeldetag: 25.03.1996
(51) Int. Cl.: C08K 13/02, C08L 67/02, C08L 69/00

(54) **Flammgeschützte thermoplastische Formmassen**
Flame-resistant thermoplastic moulding compositions
Masses de moulage thermoplastiques ignifugés

(30) Priorität: 03.04.1995 DE 19512407
(43) Veröffentlichungstag der Anmeldung: 09.10.1996
(73) Patentinhaber: BASF AKTIENGESELLSCHAFT, 67056 Ludwigshafen (DE)
(72) Erfinder: Gareiss, Brigitte, Dr., 67271 Obersülzen (DE); Knoll, Manfred, 67591 Wachenheim (DE); Plachetta, Christoph, Dr., 67117 Limburgerhof (DE)

(56) Entgegenhaltungen:
- EP-A- 0 627 463
- DATABASE WPI Derwent Publications Ltd., London, GB; AN 89-351469 XP002009251 & JP-A-01 261 453 (TEIJIN KK) , 18.Oktober 1989
- DATABASE WPI Derwent Publications Ltd., London, GB; AN 87-233050 XP002009252 & JP-A-62 158 753 (TORAY IND INC) , 14.Juli 1987
- DATABASE WPI Derwent Publications Ltd., London, GB; AN 84-174014 XP002009253 & JP-A-59 096 159 (TEIJIN KK) , 2.Juni 1984

## Beschreibung

Die Erfindung betrifft flammgeschützte thermoplastische Formmassen, enthaltend

| | | |
|---|---|---|
| A) | 10 bis 97,9 Gew.-% | eines thermoplastischen Polyesters |
| | | |
| B) | 1 bis 20 Gew.-% | Decabromdiphenylethan |
| | | |
| C) | 1 bis 15 Gew.-% | eines Metalloxides oder Metallsulfides oder Metallborates oder deren Mischungen, |
| | | |
| D) | 0,1 bis 5 Gew.-% | eines Esters aus mindestens einem Alkohol mit mindestens 3 OH-Gruppen und einer oder mehrerer aliphatischen Mono- oder Dicarbonsäuren mit 5 bis 34 C-Atomen, |
| | | |
| E) | 0 bis 70 Gew.-% | weiterer Zusatzstoffe und Verarbeitungshilfsmittel, |

wobei die Gewichtsprozente der Komponenten A) bis E) zusammen 100 % ergeben.

Weiterhin betrifft die Erfindung die Verwendung der erfindungsgemäßen Formmassen zur Herstellung von Formkörpern, insbesondere für die Elektro- und Elektronikindustrie und die hierbei erhältlichen Formkörper.

Es ist u.a. aus der EP-A 469 569 und aus der US-A 5,077,334 bekannt, daß halogenhaltige Verbindungen wie Decabromdiphenylethan allgemein zur Herstellung von flammwidrigen Thermoplasten verwendet werden. In diesen Schriften sind darüber hinaus auch übliche Synergisten genannt, die die Brandeigenschaften wesentlich verstärken sollen.

Nachteilig ist bei Flammschutzmitteln auf Basis von halogenierten Kohlenwasserstoffen in Thermoplasten, insbesondere bei Polyestern, daß sich die elektrischen Eigenschaften verschlechtern.

Für Anwendungen in der Elektrik- und Elektronikindustrie ist es erforderlich, daß die Kriechstromfestigkeit möglichst hoch ist.

Der CTI-Wert stellt hierbei die Stromstärke dar, bei welcher eine Leitfähigkeit des Formkörpers festgestellt wird. Je höher der CTI-Wert, desto besser ist die Kriechstromfestigkeit des flammgeschützten Materials.

Ester aus mehrwertigen Alkoholen mit Mono- oder Dicarbonsäuren werden wie z.B. aus Taschenbuch der Kunststoff-Additive, herausgegeben von R. Gächter und H. Müller, Carl Hanser Verlag München, 1983, S. 310-353, bekannt ist - als Schmiermittel bei der Verarbeitung zugesetzt.

Aufgabe der vorliegenden Erfindung war es, flammgeschützte Polyesterformmassen zur Verfügung zu stellen, die einen guten Flammschutz bei gleichzeitig guten elektrischen Eigenschaften, insbesondere einer guten Kriechstromfestigkeit, aufweisen.

Eine weitere Aufgabe war es, die mechanischen Eigenschaften sowie gleichzeitig die Verarbeitbarkeit, insbesondere die Fließfähigkeit, für faserverstärkte, flammgeschützte Polyester zu verbessern.

Demgemäß wurden die eingangs definierten Formmassen gefunden. Bevorzugte Ausführungsformen sind den Unteransprüchen zu entnehmen.

Überraschenderweise wurde gefunden, daß durch die erfindungsgemäße Flammschutzmittelkombination aus Decabromdiphenylethan, Synergisten wie Metalloxiden und Esterverbindung(en) eine gute Kriechstromfestigkeit kombiniert mit guten Flammschutzeigenschaften für Polyesterformmassen erzielt werden kann.

Zusätzlich erhöht die erfindungsgemäße Flammschutzmittelkombination die Reißdehnung und Zähigkeit von verstärkten Polyesterformmassen, wobei überrachenderweise derartige Formmassen gleichzeitig eine wesentlich verbesserte Fließfähigkeit aufweisen.

Als Komponente (A) enthalten die erfindungsgemäßen Formmassen 10 bis 97,9, bevorzugt 20 bis 93,9 und insbesondere 30 bis 92,7 Gew.-% und ganz besonders 30 bis 80 Gew.-% eines thermoplastischen Polyesters.

Allgemein werden Polyester auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt.

Die relative Viskosität der Polyester (A) liegt im allgemeinen im Bereich von 1,2 bis 1,8, vorzugsweise von 1,5 bis 1,7 (gemessen in einer 0,5 gew.-%igen Lösung in einem Phenol/o-Dichlorbenzolgemisch (Gew.-Verh. 1:1 bei 25°C).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel I 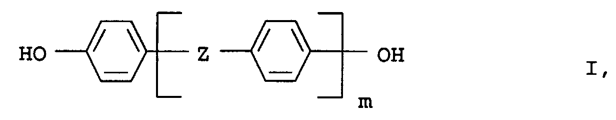 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen I können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Di-(hydroxyphenyl)sulfon, Di-(hydroxybenzoyl)benzol Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di (3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di (3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt bis zu 90 Gew.-%, vorzugsweise bis zu 50 Gew.-%, bezogen auf 100 Gew.-% der Komponente (A).

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die erfindungsgemäßen Formmassen Decabromdiphenylethan als Flammschutzmittel in Mengen von 1 bis 20, vorzugsweise 5 bis 15 und insbesondere 5 bis 12 Gew.-%, bezogen auf das Gesamtgewicht der Komponenten A) bis E).

Verfahren zur Herstellung der Verbindung sind dem Fachmann bekannt. Die im Handel erhältlichen Produkte sind pulverförmig mit einem Schmelzbereich von 345°C bis 355°C.

Insbesondere bevorzugt für die erfindungsgemäße Flammschutzmittelkombination ist Decabromdiphenylethan, welches gemäß den Verfahren der EP-A 469 569 und der US-A-5,077,334 erhältlich ist.

Dieses Produkt ist unter dem Warenzeichen Saytex® 8010 im Handel erhältlich.

Als Komponente C) enthalten die erfindungsgemäßen Formmassen 1 bis 15, bevorzugt 5 bis 15 und insbesondere 5 bis 12 Gew.-% eines Metalloxides oder Metallsulfides oder Metallborates oder deren Mischungen.

Unter der Komponente C) sind solche Oxide, Sulfide und/oder Borate zu verstehen, die als Synergist für das Flammschutzmittel B) wirken, d.h. die Flammschutzwirkung in einem beträchtlichen Ausmaß erhöhen.

Als Metalloxide seien Zinkoxid, Bleioxid, Eisenoxid, Aluminiumoxid, Zinnoxid, Magnesiumoxid oder deren Mischungen genannt, wobei Antimontrioxid und/oder Antimonpentoxid bevorzugt sind.

Als Metallsulfide können beispielsweise Zinksulfid oder Zinnsulfid eingesetzt werden, wobei Zinnsulfid bevorzugt ist. Als Metallborate seien Bariumborate oder Calciumborate genannt, wobei Zinkborat bevorzugt ist.

Als Komponente D) enthalten die erfindungsgemäßen Formmassen 0,1 bis 5, bevorzugt 0,1 bis 3 und insbesondere 0,3 bis 0,7 Gew.-% eines Esters aus mindestens einem Alkohol mit 3 OH-Gruppen und einer oder mehrerer aliphatische Mono- oder Dicarbonsäure mit 5 bis 34, vorzugsweise 16 bis 22 C-Atomen.

Selbstverständlich können auch Mischungen der Ester eingesetzt werden.

Die mehrwertigen Alkohole weisen bevorzugt 3 bis 6 OH-Gruppen auf. Beispielsweise seien Glycerin, Trimethylolpropan, Hexantriol, Erythritol, Arabitol, Adonitol, Mannitol, Dulcitol genannt, wobei Mesoaerythritol, Xylitol, Sorbitol, Pentaerythritol bevorzugt sind.

Als Mono- oder Dicarbonsäuren seine Capronsäure, Undecansäure, Laurinsäure, Tridecansäure, Valeriansäure, Adipinsäure, Azelainsäure, Palmitinsäure, Behensäure und Glutarsäure genannt, wobei Stearinsäure bevorzugt ist. Der Alkohol kann teilweise oder ganz verestert vorliegen. Beispiele für geeignete Ester sind teilweise oder ganz veresterte Produkte aus Pentaerythritol mit Stearinsäure oder aus Neopentylglykol mit Stearinsäure. Als weitere bevorzugte Ester seien Glycerintristearat genannt, wobei Pentaerythrityltetrastearat besonders bevorzugt ist.

Als Komponente E) können die erfindungsgemäßen Formmassen 0 bis 70, vorzugsweise bis zu 60 und insbesondere bis zu 50 Gew.-% üblicher Zusatzstoffe und Verarbeitungshilfsmittel enthalten.

Übliche Zusatzstoffe E) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl-(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxy-gruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

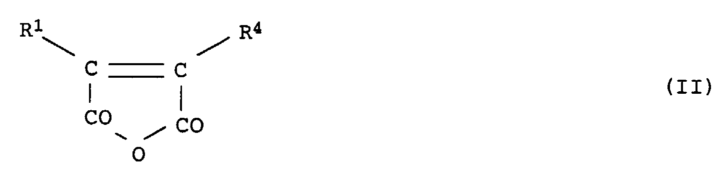

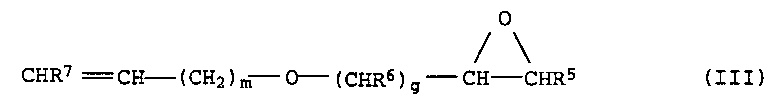

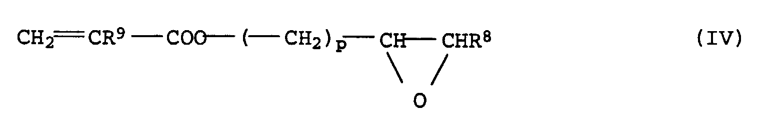

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/ oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| | |
| 0,1 bis 40, | insbesondere 0,3 bis 20 Gew.-% Glycidylacrylat und/ oder Glycidylmethacrylat, (Meth)acrylsäure und/oder Maleinsäureanhydrid, und |
| | |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 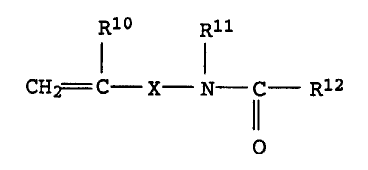 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- x: eine chemische Bindung, eine C₁- bis C₁₀-Alkylen- oder C₆-C₁₂-Arylengruppe oder 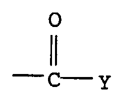
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino) ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben |
| | | zweite Hülle wie unter I oder IV für die Hülle beschrieben |

Besonders bevorzugte Pfropfpolymerisate sind ABS-, ASA- und SAN-Polymerisate.

Diese Pfropfpolymerisate werden insbesondere zur Schlagzähmodifizierung von Polycarbonat oder Polybutylenterephthalat (PBT) gegebenenfalls in Mischung mit Polyethylenterephthalat in Mengen von bis zu 40 Gew.-%, vorzugsweise bis zu 30 Gew.-%, eingesetzt, bezogen auf die Komponenten A bis E. Besonders bevorzugte Zusammensetzungen der erfindungsgemäßen Formmassen enthalten:

| | | |
|---|---|---|
| A) | 30 bis 80 Gew.-% | eines Polycarbonats oder Polybutylenterephthalats oder Polyethylenterephthalats oder deren Mischungen, |
| | | |
| B) | 1 bis 20 Gew.-% | Decabromdiphenylethan, |
| | | |
| C) | 1 bis 15 Gew.-% | eines Metalloxides oder Metallsulfides oder Metallborates oder deren Mischungen, |
| | | |
| D) | 0,1 bis 5 Gew.-% | eines Esters aus mindestens einem Alkohol mit mindestens 3 OH-Gruppen und einer oder mehrerer aliphatischen Mono- oder Dicarbonsäuren mit 5 bis 34 C-Atomen, |
| | | |
| E1) | 1 bis 40 Gew.-% | eines ASA-, SAN- oder ABS-Pfropfpolymerisates oder deren Mischungen |
| | | |
| E2) | 1 bis 40 Gew.-% | eines faser- oder teilchenförmigen Füllstoffes oder deren Mischungen, |

wobei die Gewichtsprozente der Komponenten A) bis E) 100 % ergeben.

Derartige Polycarbonat Blendprodukte sind z.B. unter dem Warenzeichen Terblend® der BASF AG im Handel erhältlich. Die Blends auf Basis von PBT mit ASA sind unter dem Warenzeichen Ultradur® S (ehemals Ultrablend®) der BASF AG erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden, vorzugsweise für Mischungen aus Polyestern mit ASA-, ABS- oder SAN-Kautschuken in Mengen von 5 bis 35 Gew.-%.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarineblau und Ruß als Farbstoffe zugesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Die erfindungsgemäßen thermoplastischen Formmassen können nach an sich bekannten Verfahren hergestellt werden, in dem man die Ausgangskomponenten in üblichen Mischvorrichtungen wie Schnecken-extrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponenten B) bis D) sowie gegebenenfalls übliche Zusatzstoffe E) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute Flammschutzeigenschaften bei gleichzeitig guter Kriechstromfestigkeit aus. Sie eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stekker und Steckerleisten, Spulenkörper, Gehäuse für Kondensatoren oder Schaltschütze sowie Sicherungsschalter, Relaisgehäuse und Reflektoren.

### Beispiele

- Komponente A/1):: Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol), 1:1-Mischung bei 25°C.
- Komponente A/2):: Polyethylenterephthalat mit einer VZ von 77 ml/g (VZ wurde gemäß A/1 bestimmt).

### Bestimmung der Carboxylendgruppen:

100 mg Polyester wurden in 7 ml Nitrobenzol bei 200°C gelöst. Diese Lösung wurde auf 150°C abgekühlt und mit 7 ml eines Gemisches aus 2 g Kaliumacetat pro 1 Lösung, wobei die Lösung aus 10 Gew.-% Wasser und 90 Gew.-% Isopropanol bestand, verdünnt. Dabei wurde Kalium an den Polyester gebunden und Essigsäure freigesetzt, welche potentiometrisch titriert wurde.
- Komponente B):: Decabromdiphenylethan (Saytex® 8010, Ethyl Corporation) Brom-Gehalt: 82 %
- Komponente C):: Antimontrioxid mit einer Dichte von 5,2 bis 5,8 g/cm³
- Komponente D):: Tetrastearat von Pentaerythrol
- Komponente E/1):: Pfropfcopolymerisat aus Acrylnitril / Styrol - Kern und Acrylnitril-Hülle (ASA) mit einer Fließfähigkeit gemessen nach ISO 1133 bei 220°C/21,6 kg Belastung von 12 ml/10 min.
- Komponente E/2):: Glasfasern mit einem mittleren Faserdurchmesser von 10 µm.

Die Komponenten A) bis E) wurden auf einem Zweischneckenextruder bei 250 bis 260°C abgemischt und in ein Wasserbad extrudiert. Nach Granulierung und Trocknung wurden auf einer Spritzgußmaschine Prüfkörper gespritzt und geprüft.

Der Brandtest erfolge nach UL 94 an 1,6 mm (1/16-Zoll)-Prüfkörpern mit üblicher Konditionierung. Die Kriechstromfestigkeit wurde nach IEC 112/1979 bestimmt, die Schlagzähigkeit gemäß ISO 179/1eU.

Die Fließweglänge wurde in einem Spiralwerkzeug bei einer Massetemperatur von 260°C (Versuche 1 bis 9, Tabelle 2) bzw. von 275°C (Versuche 10 bis 13), Tabelle 2 und einer Formtemperatur von 80°C bestimmt.

Die Zusammensetzung der Formmassen und die Ergebnisse der Messungen sind den Tabellen zu entnehmen.

**Tabelle 1**

| Beispiel | 1* | 2* | 3* | 4* | 5* | 6 |
|---|---|---|---|---|---|---|
| Komp. A/1) [Gew.-%] | 100 | 99,5 | 90 | 85 | 95 | 84,5 |
| Komp. B) [Gew.-%] | | | 10 | 10 | | 10 |
| Komp. C) [Gew.-%] | | | | 5 | 5 | 5 |
| Komp. D) [Gew.-%] | | 0,5 | | | | 0,5 |
| | | | | | | |
| UL 94 (1/16") 1,6 mm | V-- | V-- | V-1 | V-0 | V-- | V-0 |
| | | | | | | |
| CTI [V] | 600 | 600 | 250 | 175 | 325 | 250 |
| | | | | | | |
| Schlagzähigkeit [kJ/m²] | kein Bruch | kein Bruch | 51 | 45 | 55 | 47 |

| | | | | | | |
|---|---|---|---|---|---|---|
| * Vergleichsbeispiele | | | | | | |

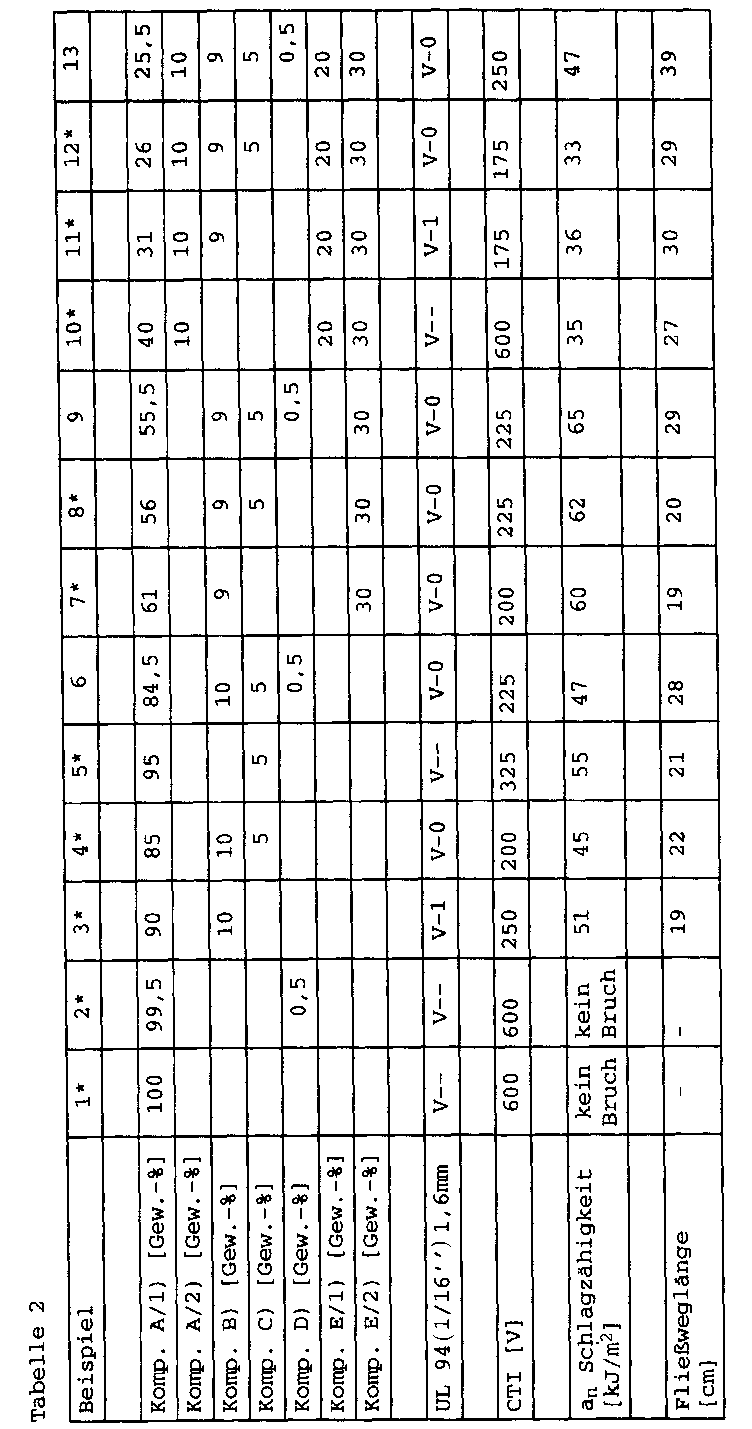

## Patentansprüche

1. Flammgeschützte thermoplastische Formmassen, enthaltend
| | | |
|---|---|---|
| A) | 10 bis 97,9 Gew.-% | eines thermoplastischen Polyesters |
| | | |
| B) | 1 bis 20 Gew.-% | Decabromdiphenylethan |
| | | |
| C) | 1 bis 15 Gew.-% | eines Metalloxides oder Metallsulfides oder Metallborates oder deren Mischungen, |
| | | |
| D) | 0,1 bis 5 Gew.-% | eines Esters aus mindestens einem Alkohol mit mindestens 3 OH-Gruppen und einer oder mehrerer aliphatischen Mono- oder Dicarbonsäuren mit 5 bis 34 C-Atomen, |
| | | |
| E) | 0 bis 70 Gew.-% | weiterer Zusatzstoffe und Verarbeitungshilfsmittel, |
wobei die Gewichtsprozente der Komponenten A) bis E) zusammen 100 % ergeben.

2. Flammgeschützte thermoplastische Formmassen nach Anspruch 1, in denen die Komponente A) bis zu 90 Gew.-%, bezogen auf A) durch ein Polycarbonat ersetzt sein kann.

3. Flammgeschützte thermoplastische Formmassen nach den Ansprüchen 1 oder 2, in denen die Komponente A) Polyethylenterephthalat oder Polybutylenterephthalat oder deren Mischungen ist.

4. Flammgeschützte thermoplastische Formmassen nach den Ansprüchen 1 bis 3, in denen die Komponente A) einen Carboxylendgruppengehalt bis zu 100 mval/kg Polyester aufweist.

5. Flammgeschützte thermoplastische Formmassen nach den Ansprü0 chen 1 bis 4, in denen die Komponente C) Antimontrioxid ist.

6. Flammgeschützte thermoplastische Formmassen nach den Ansprüchen 1 bis 5, in denen die Komponente D) Pentaerythritoltetrastearat ist.

7. Flammgeschützte thermoplastische Formmassen nach Anspruch 1, enthaltend
| | | |
|---|---|---|
| A) | 30 bis 80 Gew.-% | eines Polycarbonats oder Polybutylenterephthalats oder Polyethylenterephthalats oder deren Mischungen, |
| | | |
| B) | 1 bis 20 Gew.-% | Decabromdiphenylethan, |
| | | |
| C) | 1 bis 15 Gew.-% | eines Metalloxides oder Metallsulfides oder Metallborates oder deren Mischungen, |
| | | |
| D) | 0,1 bis 5 Gew.-% | eines Esters aus mindestens einem Alkohol mit mindestens 3 OH-Gruppen und einer oder mehrerer aliphatischen Mono- oder Dicarbonsäuren mit 5 bis 34 C-Atomen, |
| | | |
| E1) | 1 bis 40 Gew.-% | eines ASA-, SAN- oder ABS-Pfropfpolymerisates oder deren Mischungen |
| | | |
| E2) | 1 bis 40 Gew.-% | eines faser- oder teilchenförmigen Füllstoffes oder deren Mischungen, |
wobei die Gewichtsprozente der Komponenten A) bis E) 100 % ergeben.

8. Verwendung der flammgeschützten thermoplastischen Formmassen gemäß den Ansprüchen 1 bis 7 zur Herstellung von Fasern, Folien und Formkörpern.

9. Verwendung der flammgeschützten thermoplastischen Formmassen gemäß den Ansprüchen 1 bis 7 zur Herstellung von elektronischen oder elektrischen Bauteilen.

10. Formkörper erhältlich aus den flammgeschützten thermoplastischen Formmassen gemäß den Ansprüchen 1 bis 7.

11. Lampenfassungen, Lampenhalterungen, Stecker, Steckerleisten, Spulenkörper, Kondensatorengehäuse, Schaltschutzgehäuse, Sicherungsschalter, Relaisgehäuse, Reflektoren erhältlich aus den flammgeschützten thermoplastischen Formmassen gemäß den Ansprüchen 1 bis 7.

## Claims

1. A flameproofed thermoplastic molding material containing
| | | |
|---|---|---|
| A) | from 10 to 97.9 % | by weight of a thermoplastic polyester, |
| | | |
| B) | from 1 to 20 % | by weight of decabromodiphenylethane, |
| | | |
| C) | from 1 to 15 % | by weight of a metal oxide or metal sulfide or metal borate or a mixture thereof, |
| | | |
| D) | from 0.1 to 5 % | by weight of an ester of at least one alcohol having at least 3 OH groups and one or more aliphatic mono- or dicarboxylic acids of 5 to 34 carbon atoms and |
| | | |
| E) | from 0 to 70 % | by weight of further additives and processing assistants, |
the percentages by weight of the components A) to E) summing to 100 %.

2. A flameproofed thermoplastic molding material as claimed in claim 1, in which up to 90 % by weight, based on A), of the component A) may be replaced with a polycarbonate.

3. A flameproofed thermoplastic molding material as claimed in claim 1 or 2, in which the component A) is polyethylene terephthalate or polybutylene terephthalate or a mixture thereof.

4. A flameproofed thermoplastic molding material as claimed in any of claims 1 to 3, in which the component A) contains up to 100 meq of terminal carboxyl groups per kg of polyester.

5. A flameproofed thermoplastic molding material as claimed in any of claims 1 to 4, in which the component C) is antimony trioxide.

6. A flameproofed thermoplastic molding material as claimed in any of claims 1 to 5, in which the component D) is pentaerythrityl tetrastearate.

7. A flameproofed thermoplastic molding material as claimed in claim 1, containing
| | | |
|---|---|---|
| A) | from 30 to 80 % by weight | of a polycarbonate or polybutylene terephthalate or polyethylene terephthalate or a mixture thereof |
| | | |
| B) | from 1 to 20 % by weight | of decabromodiphenylethane, |
| | | |
| C) | from 1 to 15 % by weight | of a metal oxide or metal sulfide or metal borate or a mixture thereof, |
| | | |
| D) | from 0.1 to 5 % by weight | of an ester of at least one alcohol having at least 3 OH groups and one or more aliphatic mono- or dicarboxylic acids of 5 to 34 carbon atoms, |
| | | |
| E1) | from 1 to 40 % by weight | of an ASA, SAN or ABS graft polymer or a mixture thereof |
| | | |
| E2) | from 1 to 40 % by weight | of a fibrous or particulate filler or a mixture thereof, |
the percentages by weight of components A) to E) summing to 100 %.

8. Use of a flameproofed thermoplastic molding material as claimed in any of claims 1 to 7 for the production of fibers, films and moldings.

9. Use of a flameproofed thermoplastic molding material as claimed in any of claims 1 to 7 for the production of electronic or electrical components.

10. A molding obtainable from a flameproofed thermoplastic molding material as claimed in any of claims 1 to 7.

11. A lamp socket, lamp holder, plug, multipoint connector, coil former, capacitor housing, contactor housing, fuse switch, relay housing or a reflector obtainable from a flameproofed thermoplastic molding material as claimed in any of claims 1 to 7.

## Revendications

1. Masses à mouler thermoplastiques ignifugées contenant
| | | |
|---|---|---|
| A) | 10-97,9 % en poids | d'un polyester thermoplastique, |
| B) | 1-20 % en poids | de décabromodiphényléthane, |
| C) | 1-15 % en poids | d'un oxyde métallique ou d'un sulfure métallique ou d'un borate métallique ou de leurs mélanges, |
| D) | 0,1-5 % en poids | d'un ester formé à partir d'au moins un alcool ayant au moins trois groupements OH et d'un ou plusieurs acides mono- ou dicarboxyliques aliphatiques ayant 5-34 atomes de carbone, |
| E) | 0-70 % en poids | d'autres additifs et agents de traitement, |
les pourcentages en poids des composants A) à E) représentant ensemble 100 %.

2. Masses à mouler thermoplastiques ignifugées selon la revendication 1, dans lesquelles le composant A) peut être remplacé par un polycarbonate jusqu'à 90 % en poids, par rapport à A).

3. Masses à mouler thermoplastiques ignifugées selon la revendication 1 ou 2, dans lesquelles le composant A) est le polyéthylènetéréphtalate ou le polybutylènetéréphtalate ou leurs mélanges.

4. Masses à mouler thermoplastiques ignifugées selon l'une quelconque des revendications 1 à 3, dans lesquelles le composant A) présente une teneur en groupements carboxylène allant jusqu'à 100 mval/kg de polyester.

5. Masses à mouler thermoplastiques ignifugées selon l'une quelconque des revendications 1 à 4, dans lesquelles le composant C) est le trioxyde d'antimoine.

6. Masses à mouler thermoplastiques ignifugées selon l'une quelconque des revendications 1 à 5, dans lesquelles le composant D) est le tétrastéarate de pentaérythrol.

7. Masses à mouler thermoplastiques ignifugées selon la revendication 1, contenant
| | | |
|---|---|---|
| A) | 30-80 % en poids | d'un polycarbonate ou d'un polybutylènetéréphtalate ou d'un polyéthylènetéréphtalate ou de leurs mélanges, |
| B) | 1-20 % en poids | de décabromodiphényléthane |
| C) | 1-15 % en poids | d'un oxyde métallique ou d'un sulfure métallique ou d'un borate métallique ou de leurs mélanges, |
| D) | 0,1-5 % en poids | d'un ester formé à partir d'au moins un alcool ayant au moins trois groupements OH et d'un ou plusieurs acides mono- ou dicarboxyliques aliphatiques ayant 5-34 atomes de carbone, |
| E1) | 1-40 % en poids | d'un copolymère greffé ASA, SAN ou ABS, ou de leurs mélanges, |
| E2) | 1-40 % en poids | d'une matière de charge sous forme de particules ou de fibres ou de leurs mélanges, |
les pourcentages en poids des composants A) à E) représentant ensemble 100 %.

8. Utilisation de masses à mouler thermoplastiques ignifugées selon l'une quelconque des revendications 1 à 7 pour la fabrication de fibres, de feuilles et de corps moulés.

9. Utilisation de masses à mouler thermoplastiques ignifugées selon l'une quelconque des revendications 1 à 7 pour la fabrication de composants électroniques ou électriques.

10. Corps moulés obtenus à partir des masses à mouler thermoplastiques ignifugées selon l'une quelconque des revendications 1 à 7.

11. Douilles de lampes, supports de lampes, connecteurs, barres de connecteurs, armatures de bobines, boîtiers de condensateurs, boîtiers de contacteurs de manoeuvre, interrupteurs de sécurité, boîtiers relais, réflecteurs obtenus à partir des masses à mouler thermoplastiques ignifugées selon l'une quelconque des revendications 1 à 7.
